# EUROPÄISCHE PATENTANMELDUNG

(11) **EP 1 764 294 A2**
(43) Veröffentlichungstag der Anmeldung: **21.03.2007**
(21) Anmeldenummer: 06018249.0
(22) Anmeldetag: 31.08.2006
(51) Int. Cl.: B62H 5/18, E05B 67/36

(54) **Anschlussteil für ein Bremsscheibenschloss**

(30) Priorität: 14.09.2005 DE 202005014527 U
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Die Erfindung betrifft ein Anschlussteil (11) für ein U-förmiges, einen Aufnahmespalt (13) für eine Bremsscheibe aufweisendes Bremsscheibenschloss (15), mit einem länglichen Verbindungssteg (17) zum Einführen in den Aufnahmespalt des Bremsscheibenschlosses, wobei an den Enden des Verbindungsstegs jeweils eine Blockierverbreiterung (19,21) ausgebildet ist, und wobei wenigstens eine der Blockierverbreiterungen eine Befestigungsöse (23) aufweist.

## Beschreibung

Die Erfindung betrifft ein Anschlussteil für ein U-förmiges, einen Aufnahmespalt für eine Bremsscheibe aufweisendes Bremsscheibenschloss.

Ein derartiges Bremsscheibenschloss dient zum Sichern beispielsweise eines Motorrads, eines Motorrollers oder eines Quads gegen eine unbefugte Benutzung. Hierfür wird das Schloss derart an eine Bremsscheibe des geparkten Fahrzeugs angelegt, dass die Bremsscheibe in den von dem U-förmigen Schlosskörper gebildeten Aufnahmespalt hineinragt. Daraufhin wird ein Schließbolzen des Schlosses durch entsprechende Betätigung in eine Schließstellung bewegt, in der der Schließbolzen den Aufnahmespalt durchquert und dabei durch eine Belüftungsöffnung der Bremsscheibe geführt ist. Hierdurch ist das Schloss an der Bremsscheibe verriegelt, und die Benutzung des Fahrzeugs wird verhindert, bis das Schloss wieder von der Bremsscheibe gelöst wird.

Der Erfindung liegt die Aufgabe zugrunde, ein Motorrad oder dergleichen nicht nur gegen ein unbefugtes Wegfahren oder Wegschieben zu sichern, sondern auch die Möglichkeit zu schaffen, das Fahrzeug an einer Befestigungsstelle - wie einem Befestigungsanker, einer Straßenlaterne oder dergleichen - unter Verwendung des bereits vorhandenen Bremsscheibenschlosses festzuketten.

Diese Aufgabe wird durch ein Anschlussteil mit den Merkmalen des Anspruchs 1 gelöst, und insbesondere dadurch, dass das Anschlussteil einen länglichen Verbindungssteg zum Einführen in den Aufnahmespalt des Bremsscheibenschlosses aufweist, wobei an den Enden des Verbindungsstegs jeweils eine Blockierverbreiterung ausgebildet ist, und wobei wenigstens eine der Blockierverbreiterungen eine Befestigungsöse aufweist.

Das erfindungsgemäße Anschlussteil besitzt also einen Verbindungssteg mit wenigstens zwei Blockierverbreiterungen an den beiden Längsenden des Verbindungsstegs. Das Anschlussteil kann somit dergestalt in den Aufnahmespalt eines U-förmigen Bremsscheibenschlosses eingeführt werden, dass das Anschlussteil bezüglich der Längsrichtung des Verbindungsstegs mittels der Blockierverbreiterungen gegen eine Entnahme aus dem Aufnahmespalt gesichert ist. Bezüglich einer Richtung quer zu der Längserstreckung des Verbindungsstegs ist das Anschlussteil durch den U-förmigen Schlosskörper des Bremsscheibenschlosses bzw. durch einen Schließbolzen des Bremsscheibenschlosses gegen eine Entnahme aus dem Aufnahmespalt gesichert ist. Aufgrund der Ausgestaltung des Anschlussteils mit wenigstens zwei Blockierverbreiterungen, die über einen Verbindungssteg miteinander verbunden sind, kann der Verbindungssteg derart schmal ausgebildet sein, das das Anschlussteil gemeinsam mit einer Bremsscheibe in den Aufnahmespalt des Bremsscheibenschlosses eingeführt werden kann, so dass das Bremsscheibenschloss auf an sich bekannte Weise mittels eines Schließbolzens an der Bremsscheibe verriegelt werden kann und das Anschlussteil dabei zwischen der Bremsscheibe und dem U-förmigen Schlosskörper des Bremsscheibenschlosses gefangen ist.

Da an wenigstens einer der genannten Blockierverbreiterungen des Anschlussteils eine Befestigungsöse ausgebildet ist, kann das Bremsscheibenschloss - und somit ein Fahrzeug, an dessen Bremsscheibe das Schloss verriegelt ist - mittels einer Kette, eines Stahlseils, eines Stahlkabels oder dergleichen zusätzlich an einer Befestigungsstelle in der Umgebung des Fahrzeugs gesichert werden. Das Fahrzeug ist somit durch das Bremsscheibenschloss nicht nur gegen ein unbefugtes Wegfahren oder Wegrollen gesichert, sondern es kann von der Befestigungsstelle auch nicht mehr weggetragen oder -geschleppt werden. Zu diesem Zweck kann an der Befestigungsöse beispielsweise ein Ende einer Kette oder dergleichen dauerhaft befestigt sein, wobei an dem anderen Ende der Kette eine Schlaufe (z.B. vergrößertes Kettenglied) ausgebildet ist, durch die das Anschlussteil hindurchgeführt werden kann, um in der erläuterten Weise an dem Bremsscheibenschloss gesichert zu werden und um hierdurch eine geschlossene Schleife zu bilden, die beispielsweise um einen Laternenpfosten gelegt sein kann. Somit ist für das ergänzende Sichern des Fahrzeugs an der betreffenden Befestigungsstelle kein zusätzliches Schloss erforderlich. Vielmehr wirken das Bremsscheibenschloss und das Anschlussteil derart zusammen, dass nicht nur die Bremsscheibe des Fahrzeugs blockiert wird, sondern das Bremsscheibenschloss zugleich gegen ein Entfernen von dem Befestigungsort gesichert ist. Hierdurch wird die Diebstahlsicherheit beträchtlich erhöht.

Die erläuterte dauerhafte Verbindung der Befestigungsöse des Anschlussteils mit einer Kette, einem Stahlseil, einem Stahlkabel oder dergleichen ist nicht zwingend erforderlich. Vielmehr kann auch vorgesehen sein, dass die Befestigungsöse mittels eines Vorhangschlosses oder dergleichen wahlweise mit einer Kette, einem Stahlseil oder einem Stahlkabel verbunden wird. In diesem Fall ist zwar ein zusätzliches Schloss erforderlich. Jedoch kann der Benutzer hierfür auf ein bereits vorhandenes Schloss und eine bereits vorhandene Kette oder dergleichen zurückgreifen, so dass er für die Möglichkeit des zusätzlichen Sicherns des Fahrzeugs an einer Befestigungsstelle lediglich das Anschlussteil benötigt.

Gemäß einer bevorzugten Ausführungsform sind der Verbindungssteg und die hieran vorgesehenen Blockierverbreiterungen einstückig ausgebildet, d.h. die Blockierverbreiterungen sind an dem Verbindungssteg angeformt. Hierdurch ergibt sich eine besonders stabile und manipulationssichere Anordnung. Zusätzlich kann auch die genannte Befestigungsöse an der betreffenden Blockierverbreiterung angeformt sein. Alternativ hierzu kann die Befestigungsöse als ein separates Teil ausgebildet sein. In diesem Fall ist es bevorzugt, wenn die Befestigungsöse an der betreffenden Blockierverbreiterung drehbar gelagert ist. Dies erhöht den Bedienungskomfort und erschwert das Ansetzen eines Aufbruchwerkzeugs.

Weiterhin ist es bevorzugt, wenn die Blockierverbreiterungen - zumindest ohne die hieran ausgebildete Befestigungsöse - jeweils im Wesentlichen rotationssymmetrisch ausgebildet sind. Insbesondere kann eine Kreisscheibenform oder eine Kugelsegmentform vorgesehen sein, die vorzugsweise an den Kanten abgerundet ist. Eine derartige Ausgestaltung erhöht ebenfalls die Manipulationssicherheit, da durch eine rotationssymmetrische Ausbildung das Ansetzen eines Aufbruchwerkzeugs erschwert wird.

Gemäß einer vorteilhaften Weiterbildung der Erfindung ist der Verbindungssteg bezüglich der Verbindungslinie, die zwischen dem Mittelpunkt der einen Blockierverbreiterung und dem Mittelpunkt der anderen Blockierverbreiterung verläuft, seitlich versetzt angeordnet. Mit anderen Worten ist das Anschlussteil bezüglich einer Ebene, die parallel zu der Längsachse des Verbindungsstegs durch die Mittelpunkte der Blockierverbreiterungen verläuft, asymmetrisch angeordnet. Hierdurch ist es möglich, trotz eines rotationssymmetrischen Aufbaus der Blockierverbreiterungen eine optimale Nutzung des Aufnahmespalts des Bremsscheibenschlosses zu erzielen, um zugleich das Anschlussteil und eine Bremsscheibe in den Aufnahmespalt einführen und dort verriegeln zu können.

Weiterhin ist es bevorzugt, wenn eine Längsseite des Verbindungsstegs eine Einbuchtung aufweist, in die eine Bremsscheibe eingreifen kann, wenn das Anschlussteil gemeinsam mit dieser Bremsscheibe in den Aufnahmespalt des U-förmigen Bremsscheibenschlosses eingeführt ist. Hierdurch ist gewährleistet, dass das Anschlussteil und die Bremsscheibe bei einem kompakten Aufbau des Bremsscheibenschlosses gemeinsam in den Aufnahmespalt eingesetzt werden können. Die genannte Einbuchtung kann durch einen konkaven Verlauf der betreffenden Stirnseite des Verbindungsstegs gebildet sein, oder die Einbuchtung ist entsprechend dem Querschnitt der Bremsscheibe als eine im Wesentlichen rechteckige Ausnehmung des Verbindungsstegs ausgeführt.

Ferner kann vorgesehen sein, dass eine Längsseite des Verbindungsstegs an den Längsenden des Verbindungsstegs im Wesentlichen bündig an den Rand der jeweiligen Blockierverbreiterung angrenzt. Die Blockierverbreiterungen sollen also nicht wesentlich über den Verbindungssteg an der betreffenden Längsseite überstehen, um das zusätzliche Einführen einer Bremsscheibe in den Aufnahmespalt des Bremsscheibenschlosses nicht zu behindern.

Insbesondere bei einer asymmetrischen Ausgestaltung des Anschlussteils ist es bevorzugt, wenn das Anschlussteil eine Kennzeichnung aufweist, die eine bevorzugte Einführrichtung für das Einführen des Anschlussteils in den Aufnahmespalt des Bremsscheibenschlosses angibt. Hierdurch wird eine fehlerhafte Anordnung des Anschlussteils an dem Bremsscheibenschloss zuverlässig vermieden.

Weitere Ausführungsformen der Erfindung sind in den Unteransprüchen genannt.

Die Erfindung wird nachfolgend lediglich beispielhaft unter Bezugnahme auf die Zeichnungen erläutert.
- Fig. 1a, 1b und 1c: zeigen eine Perspektivansicht, eine weitere Perspektivansicht bzw. eine Draufsicht eines Anschlussteils.

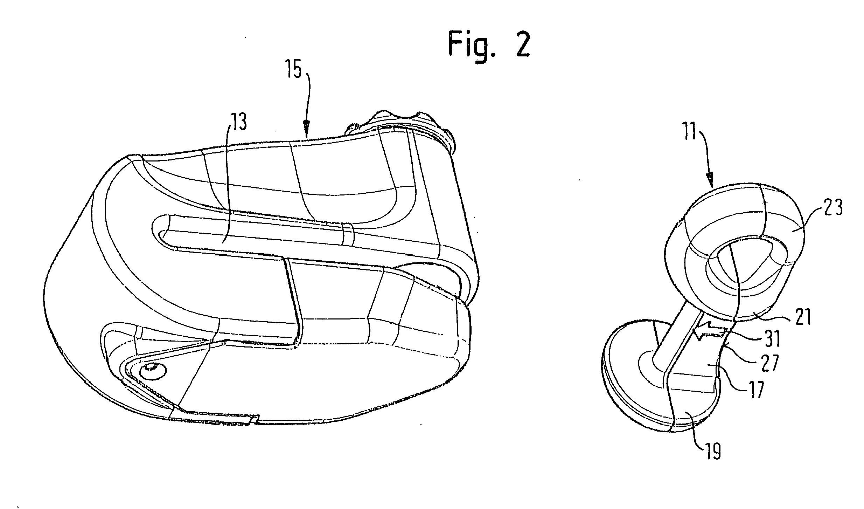

- Fig. 2: zeigt eine Perspektivansicht des Anschlussteils und eines zugeordneten Bremsscheibenschlosses von schräg unten.
- Fig. 3a und 3b: zeigen das Bremsscheibenschloss in einer Seitenansicht bzw. einer Unteransicht, wobei das Anschlussteil in den Aufnahmespalt des Bremsscheibenschlosses eingesetzt ist.

In den Figuren ist ein Anschlussteil 11 gezeigt, das dergestalt ausgebildet ist, dass es in das hintere Ende eines Aufnahmespalts 13 eines U-förmigen Bremsscheibenschlosses 15 eingeführt und dort mittels einer ebenfalls in den Aufnahmespalt 13 eingesetzten Bremsscheibe (nicht gezeigt) eingeschlossen werden kann.

Zu diesem Zweck besitzt das Anschlussteil 11 einen flachen Verbindungssteg 17. An dem einen Ende des Verbindungsstegs 17 ist eine Blockierverbreiterung 19 angeformt, die die Form eines abgeflachten Kugelsegments besitzt und somit rotationssymmetrisch ausgebildet ist. An dem anderen Ende des Verbindungsstegs 17 ist eine weitere Blockierverbreiterung 21 ausgebildet, die im Wesentlichen kreisscheibenförmig und somit ebenfalls rotationssymmetrisch ausgebildet ist. An dieser weiteren Blockierverbreiterung 21 ist eine Befestigungsöse 23 angeformt.

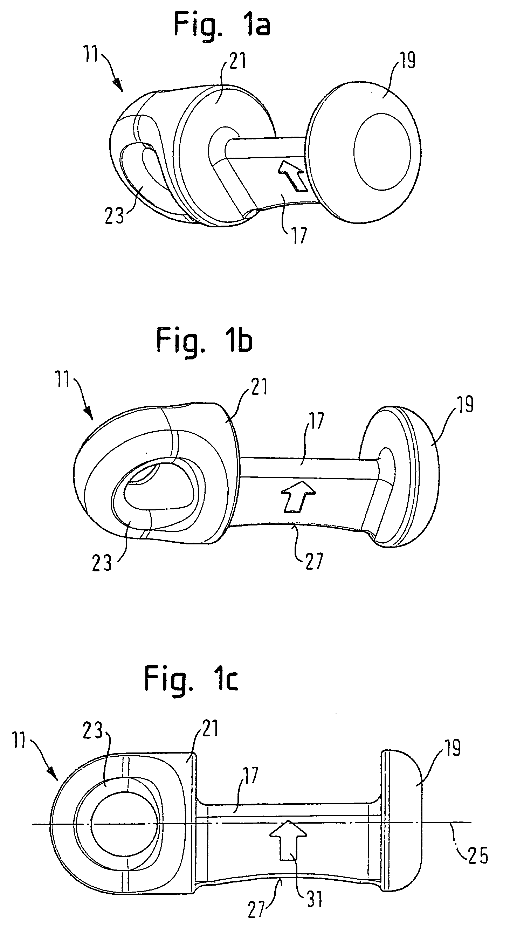

Die Rotationssymmetrieachse der Blockierverbreiterung 19 und die Rotationssymmetrieachse der weiteren Blockierverbreiterung 21 fallen zusammen und sind in Fig. 1c als gemeinsame Symmetrieachse 25 eingezeichnet. Wie aus Fig. 1c ferner ersichtlich ist, verläuft der Verbindungssteg 17 bezüglich dieser Symmetrieachse 25 parallel versetzt, und zwar in der Draufsicht gemäß Fig. 1c nahezu vollständig auf einer Seite der durch die Symmetrieachse 25 festgelegten Mittensymmetrieebene der Blockierverbreiterungen 19, 21. Aus der Draufsicht gemäß Fig. 1c ist weiterhin ersichtlich, dass die von der Symmetrieachse 25 am weitesten beabstandete Längsseite des Verbindungsstegs 17 eine Einbuchtung 27 in Form einer konkaven Wölbung besitzt. Außerdem grenzt die betreffende Längsseite des Verbindungsstegs 17 an den beiden Längsenden des Verbindungsstegs 17 im Wesentlichen bündig an den Umfang der jeweiligen Blockierverbreiterung 19 bzw. 21 an. Jede dieser Maßnahmen trägt für sich dazu bei, dass das Anschlussteil 11 raumsparend in ein Bremsscheibenschloss 15 eingesetzt werden kann, ohne hierbei das zusätzliche Einsetzen einer Bremsscheibe zu behindern, wie nachfolgend noch erläutert wird.

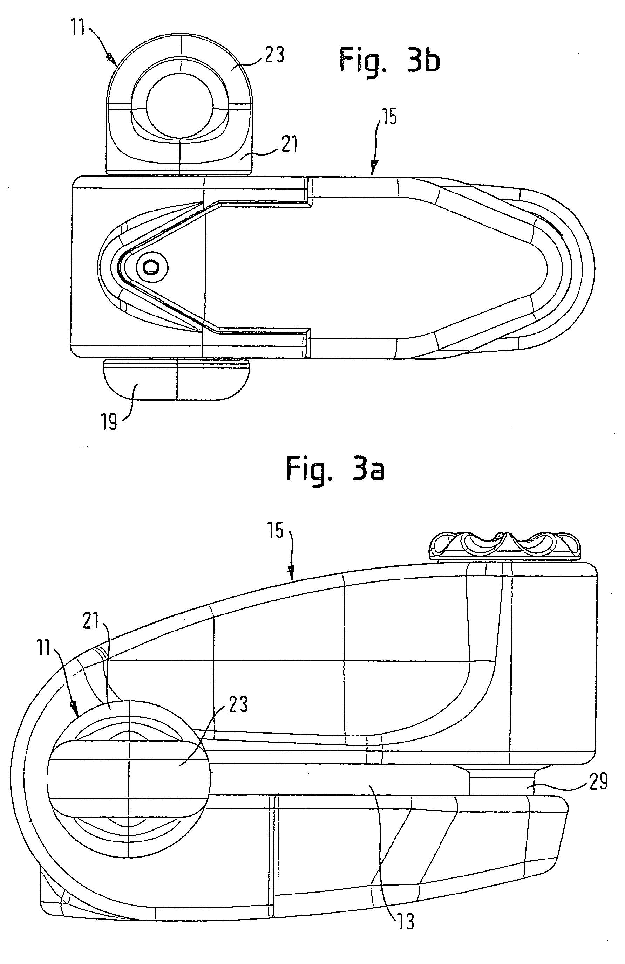

Das gezeigte Anschlussteil 11 kann an dem Bremsscheibenschloss 15 gesichert werden, indem es in den Aufnahmespalt 13 des Bremsscheibenschlosses 15 eingeführt wird und danach ein Schließbolzen 29 in eine in Fig. 3a gezeigte Schließstellung gebracht wird, in der der Schließbolzen 29 den Aufnahmespalt 13 durchquert.

Nachdem das Anschlussteil 11 in den Aufnahmespalt 13 eingeführt worden ist, und noch bevor der genannte Schließbolzen 29 in die Schließstellung gemäß Fig. 3a gebracht wird, kann das Bremsscheibenschloss 15 an eine Bremsscheibe eines Motorrads oder dergleichen Fahrzeug angelegt werden, um das Bremsscheibenschloss 15 dort auf an sich bekannte Weise zu verriegeln. Die im Zusammenhang mit Fig. 1c erläuterte besondere Formgebung des Verbindungsstegs 17 (asymmetrische Anordnung; Einbuchung 27; mit den Blockierverbreiterungen 19, 21 bündige Längsseite) ermöglicht es, dass das Anschlussteil 11 bei einem herkömmlichen Bremsscheibenschloss 15 gemeinsam mit der betreffenden Bremsscheibe ausreichend Platz zur Unterbringung in dem Aufnahmespalt 13 findet. Um zu gewährleisten, dass der Benutzer das asymmetrisch ausgebildete Anschlussteil 11 in der richtigen Stellung in den Aufnahmespalt 13 einführt, in der die Blockierverbreiterungen 19, 21 nicht das zusätzliche Einsetzen Bremsscheibe in den Aufnahmespalt 13 behindern, ist das Anschlussteil 11 an dem Verbindungssteg 17 mit einer entsprechenden Kennzeichnung der Einführrichtung in Form von Pfeilen 31 versehen.

An dem-Anschlussteil 11 kann ein Ende einer Kette, eines Stahlseils, eines Stahlkabels oder dergleichen dauerhaft befestigt sein, die bzw. das beispielsweise durch Bilden einer geschlossenen Schleife an einer Befestigungsstelle in der Umgebung des Motorrads gesichert wird. Somit dient das Bremsscheibenschloss 15 zugleich zum Blockieren der betreffenden Bremsscheibe und zum Sichern des Motorrads an der genannten Befestigungsstelle, ohne dass hierfür ein zusätzliches Schloss erforderlich ist. Das Anschlussteil 11 kann jedoch auch als loses Teil zum Anschließen einer Kette, eines Stahlseils, eines Stahlkabels oder dergleichen mittels eines zusätzlichen Schlosses dienen, so dass herkömmliche, eventuell bereits vorhandene Befestigungselemente (Kette, Vorhangschloss, etc.) verwendet werden können.

Abweichend von der Darstellung in den Figuren können auch beide Blockierverbreiterungen 19, 21 mit einer jeweiligen Befestigungsöse versehen sein.

### Bezugszeichenliste

- 11: Anschlussteil
- 13: Aufnahmespalt
- 15: Bremsscheibenschloss
- 17: Verbindungssteg
- 19: Blockierverbreiterung
- 21: Blockierverbreiterung
- 23: Befestigungsöse
- 25: Symmetrieachse
- 27: Einbuchtung
- 29: Schließbolzen
- 31: Pfeil

## Patentansprüche

1. Anschlussteil (11) für ein U-förmiges, einen Aufnahmespalt (13) für eine Bremsscheibe aufweisendes Bremsscheibenschloss (15), mit einem länglichen Verbindungssteg (17) zum Einführen in den Aufnahmespalt des Bremsscheibenschlosses, wobei an den Enden des Verbindungsstegs jeweils eine Blockierverbreiterung (19, 21) ausgebildet ist, und wobei wenigstens eine (21) der Blockierverbreiterungen eine Befestigungsöse (23) aufweist.

2. Anschlussteil nach Anspruch 1,
**dadurch gekennzeichnet,**
**dass** der Verbindungssteg (17) und die Blockierverbreiterungen (19, 21) einstückig ausgebildet sind.

3. Anschlussteil nach einem der vorhergehenden Ansprüche,
**dadurch gekennzeichnet,**
**dass** die Befestigungsöse (23) an der jeweiligen Blockierverbreiterung (21) angeformt oder drehbar gelagert ist.

4. Anschlussteil nach einem der vorhergehenden Ansprüche,
**dadurch gekennzeichnet,**
**dass** die Blockierverbreiterungen (19, 21) jeweils im Wesentlichen rotationssymmetrisch ausgebildet sind.

5. Anschlussteil nach einem der vorhergehenden Ansprüche,
**dadurch gekennzeichnet,**
**dass** die Blockierverbreiterungen (19, 21) jeweils im Wesentlichen kreisscheibenförmig oder kugelsegmentförmig ausgebildet sind.

6. Anschlussteil nach einem der vorhergehenden Ansprüche,
**dadurch gekennzeichnet,**
**dass** der Verbindungssteg (17) bezüglich der Verbindungslinie zwischen dem jeweiligen Mittelpunkt der beiden Blockierverbreiterungen (19, 21) seitlich versetzt verläuft.

7. Anschlussteil nach einem der vorhergehenden Ansprüche,
**dadurch gekennzeichnet,**
**dass** eine Längsseite des Verbindungsstegs (17) eine Einbuchtung (27) zur Aufnahme einer Bremsscheibe aufweist, wenn das Anschlussteil und die Bremsscheibe mittels eines U-förmigen Bremsscheibenschlosses aneinander verriegelt sind.

8. Anschlussteil nach einem der vorhergehenden Ansprüche,
**dadurch gekennzeichnet,**
**dass** eine Längsseite des Verbindungsstegs (17) an den Enden des Verbindungsstegs im Wesentlichen bündig an den Rand der jeweiligen Blockierverbreiterung (19, 21) angrenzt.

9. Anschlussteil nach einem der vorhergehenden Ansprüche,
**dadurch gekennzeichnet,**
**dass** das Anschlussteil (11) eine Kennzeichnung (31) aufweist, die eine Einführrichtung für das Einführen des Anschlussteils in den Aufnahmespalt (13) des Bremsscheibenschlosses (15) angibt.

10. Anschlussteil nach einem der vorhergehenden Ansprüche,
**dadurch gekennzeichnet,**
**dass** an der Befestigungsöse ein erstes Ende einer Kette, eines Seils, eines Kabels oder dergleichen dauerhaft befestigt ist, wobei an einem zweiten Ende eine Schlaufe ausgebildet ist, durch die das Anschlussteil gemeinsam mit dem ersten Ende hindurch geführt werden kann, um eine geschlossene Schleife zu bilden.

11. Bremsscheibenschloss (15) mit einem U-förmigen Schlosskörper, durch den ein Aufnahmespalt (13) für eine Bremsscheibe begrenzt wird, und mit einem Anschlussteil (11) nach einem der vorhergehenden Ansprüche.

12. Bremsscheibenschloss nach Anspruch 11,
**dadurch gekennzeichnet,**
**dass** das Anschlussteil (11) dergestalt in den Aufnahmespalt (13) des Bremsscheibenschlosses (15) einführbar ist, das das Anschlussteil in Längsrichtung des Verbindungsstegs (17) durch die Blockierverbreiterungen (19, 21) und quer zu der Längsrichtung des Verbindungsstegs durch den U-förmigen Schlosskörper und durch einen den Aufnahmespalt durchquerenden Schließbolzen (29) des Bremsscheibenschlosses gegen eine Entnahme aus dem Aufnahmespalt gesichert ist.

13. Bremsscheibenschloss nach einem der Ansprüche 11 oder 12,
**dadurch gekennzeichnet,**
**dass** der Verbindungssteg (17) des Anschlussteils (11) derart schmal ausgebildet ist, dass das Anschlussteil gemeinsam mit einer Bremsscheibe in den Aufnahmespalt (13) des Bremsscheibenschlosses (15) einführbar ist, wobei das Bremsscheibenschloss mittels eines Schließbolzens (29) an der Bremsscheibe verriegelbar ist und das Anschlussteil (11) dabei zwischen der Bremsscheibe und dem U-förmigen Schlosskörper des Bremsscheibenschlosses gefangen ist.
